# EUROPEAN PATENT APPLICATION

(11) **EP 4 318 788 A1**
(43) Date of publication of application: **07.02.2024**
(21) Application number: 22893146.5
(22) Date of filing: 08.11.2022
(51) Int. Cl.: H01M 50/569, H01M 50/502, H01M 50/358, H01M 10/48, H01M 50/211

(54) **BATTERY MODULE AND BATTERY PACK COMPRISING SAME**

(30) Priority: 12.11.2021 KR 20210155933
(71) Applicant: LG Energy Solution, Ltd., Seoul 07335 (KR)
(72) Inventor: JANG, Sung Hwan, Daejeon 34122 (KR); SEONG, Jun Yeob, Daejeon 34122 (KR); PARK, Myung Ki, Daejeon 34122 (KR)
(74) Representative: Goddar, Heinz J.
(86) International application number: PCT/KR2022/017445
(87) International publication number: WO 2023/085726

(57) **Abstract**

A battery module according to the present technology includes a battery cell assembly in which two or more longitudinal unit cells, each of which two or more battery cells having electrode leads at both ends in the longitudinal direction are arranged in a row in the longitudinal direction, are stacked in two or more columns in the thickness direction of the battery cell, a sensing line electrically connected to an electrode lead of the battery cell included in the battery cell assembly, and a module case configured to surround and accommodate the battery cell assembly, wherein a sensing pin drawn out to the outside of the module case is provided on an end portion of the sensing line.

## Description

### [Technical Field]

The present invention relates to a battery module.

More particularly, the present invention relates to a battery module configured to be expandable, in which electrical characteristics between the battery modules are easily sensed.

In addition, the present invention relates to a battery pack including the battery module.

This application claims the benefit of priority based on Korean Patent Application No. 10-2021-0155933, filed on November 12, 2021, and the entire contents of the Korean patent application are incorporated herein by reference.

### [Background Art]

Recently, secondary batteries that can be charged and discharged have been widely used as energy sources of wireless mobile devices. In addition, the secondary battery has attracted attention as an energy source of an electric vehicle, a hybrid electric vehicle, and the like, which are proposed as a solution for air pollution and the like of existing gasoline vehicles and diesel vehicles using fossil fuel. Accordingly, the types of applications using the secondary battery are diversifying due to the advantages of the secondary battery, and it is expected that the secondary battery will be applied to many fields and products in the future.

In addition, as an energy storage system (ESS), a power source for an electric vehicle (EV), or the like, there is an increasing demand for a battery module accommodating a plurality of secondary batteries electrically connected in series or in parallel and a battery pack composed of the battery modules.

Such a battery module or battery pack includes an external housing made of a metal material to protect a plurality of secondary batteries from external impacts or receive and store the secondary batteries.

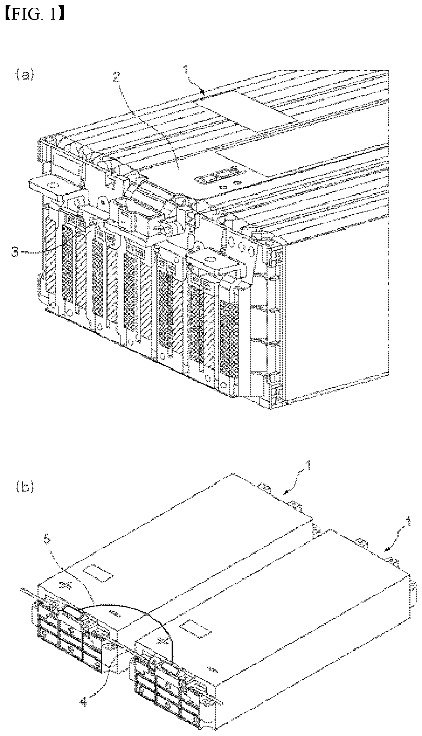

Part (a) of FIG. 1 is a partial perspective view of a conventional general battery module 1, and part (b) of FIG. 1 illustrates a connection structure of the conventional battery modules for inter-module sensing. The conventional battery module has the following problems.

First, since a single battery cell is stacked only in a thickness direction thereof, space utilization of battery cell arrangement may be reduced and a degree of freedom in design may be reduced, and thus there is a limitation in configuring a battery pack by combining these types of modules. That is, it is not easy to configure the battery module or the battery pack so as to correspond to a limited space such as a vehicle or various types of spaces. In addition, since about several tens of battery cells are stacked in one module, when ignition occurs in one battery cell, there is a risk that flame easily propagates to other battery cells and the module burns out in a short time.

Second, as shown in part (a) of FIG. 1, the conventional battery module has a structure in which a sensing line 2 is connected to a connector 3, and the connector 3 is connected to an external connector mated thereto to sense electrical characteristics of the battery module, and thus it is necessary to install a connector, which has a complicated structure, for each module. In addition, an external connector, which has a male and female coupling structure with the connector installed in the module, is separately required. Since the connector with a male and female coupling structure has a complex shape, a terminal coupling structure (a male and female connector structure) for sensing the electrical characteristics of the battery module becomes complicated. In addition, the connector having a complex structure is difficult to mold, thereby causing an increase in manufacturing costs.

Third, as shown in part (b) of FIG. 1, in order to perform inter-bank sensing in the adjacent battery modules 1, an operation of connecting the modules with a bus bar 4 is required, and a harness 5 for connecting the sensing connectors is required. Thus, in order to perform sensing between the conventional modules, an operation of connecting modules with a complex assembly structure and fixing members by laser welding or the like is required.

Accordingly, there is a need to develop a battery module related technology, which can increase a degree of freedom in design of a battery module and a battery pack, and also can easily perform sensing of each unit module as well as sensing between modules with a simple structure.

### [Related-Art Document]

### [Patent Document]

Korean Registered Patent Publication No. 10-2259416

### [Disclosure]

### [Technical Problem]

The present invention has been devised to solve the above problem, and the present invention is directed to providing an expandable battery module capable of improving space utilization of a battery module and a battery pack by connecting battery cells in a longitudinal direction in addition to a thickness direction of the battery cell.

The present invention is also directed to providing a battery module with a structure allowing a connector having a conventional complex male and female coupling structure to be omitted and a module to be direct sensed.

The present invention is also directed to providing a battery pack with a structure allowing direct sensing to be performed in a simple manner without a complex assembly structure when sensing between a plurality of battery modules.

### [Technical Solution]

A battery module according to the present invention for solving the above problems includes a battery cell assembly in which two or more longitudinal unit cells, each of which two or more battery cells having electrode leads at both ends in the longitudinal direction are arranged in a row in the longitudinal direction, are stacked in two or more columns in the thickness direction of the battery cell, a sensing line electrically connected to an electrode lead of the battery cell included in the battery cell assembly, and a module case configured to surround and accommodate the battery cell assembly, wherein a sensing pin drawn out to the outside of the module case is provided on an end portion of the sensing line.

As one example, the module case may include an opening at a position corresponding to a position of the sensing pin so that the sensing pin is drawn out to the outside through the opening.

As a specific example, the sensing line may be electrically connected to the electrode leads of all the battery cells of the battery cell assembly through at least one of a bus bar coupled to the electrode leads of the battery cell included in the battery cell assembly and a sensing member coupled to the bus bar.

As one example, the bus bar may include at least one of a terminal bus bar connected to an external terminal, and an inter-bus bar coupled to the electrode leads of the battery cells to electrically connect the battery cells.

In one embodiment, the same number of columns of longitudinal unit cells may be disposed on each of both sides with respect to the longitudinal direction of the battery cell, the electrode leads of the battery cells included in the longitudinal unit cell on one side among the longitudinal unit cells on both sides and facing each other in the longitudinal direction may be coupled to the inter-bus bar, and f the electrode leads of the battery cells included in the longitudinal unit cells on the other side among the longitudinal unit cells on both sides and facing each other in the longitudinal direction may be coupled to the terminal bus bar.

As a specific example, the sensing line may be connected to each of the inter-bus bar and the terminal bus bar, and the sensing pin of the sensing line may be bent upward or downward from a portion of the sensing line connecting the inter-bus bar and the terminal bus bar, and drawn out to the outside of the module case.

As a more specific example, the terminal bus bar may include a first terminal bus bar coupled to one electrode lead or electrode leads among the electrode leads of the battery cells, which face each other in the longitudinal direction, and a second terminal bus bar coupled to the other electrode lead or electrode leads among the electrode leads of the battery cells, and the sensing pin may include a first sensing pin on the first terminal bus bar side and a second sensing pin on the second terminal bus bar side.

As one example, a venting plate installed to extend in the longitudinal direction of the battery cell across a front end and a rear end of the module case and having a venting channel therein may be installed between the same number of columns of longitudinal unit cells, and the terminal bus bar, the inter-bus bar, and the sensing line may be supported by the venting plate.

As another embodiment, an inter-bus bar coupled to the electrode leads protruding from the battery cells at a front end and a rear end of the longitudinal unit cell may be installed at the front end and the rear end of the longitudinal unit cell, the sensing line may be coupled to the inter-bus bar, and the sensing pin of the sensing line may be drawn out to the outside through at least one of a front end plate and a rear end plate of the module case.

As a specific example, the same number of columns of longitudinal unit cells may be disposed on each of both sides with respect to the longitudinal direction of the battery cell, a venting plate installed to extend in the longitudinal direction of the battery cell across a front end and a rear end of the module case and having a venting channel formed therein may be installed between the same number of columns of longitudinal unit cells, and the inter-bus bar and the sensing line may be supported by the venting plate.

A battery pack according to another aspect of the present invention includes a battery module stack in which the battery modules in plural in the thickness direction of the battery cell are stacked, and a sensing block that extends in the thickness direction of the battery cell and is coupled to each of sensing pins drawn out to the outside of the battery module.

As one example, a coupling groove into which the sensing pin is fitted may be provided in a coupling surface of the sensing block that faces the sensing pin.

A battery pack on another example may include a battery module stack in which a plurality of the battery modules are stacked in the thickness direction of the battery cell, and a sensing block that extends in the thickness direction of the battery cell and is coupled to each of the sensing pins bent upward or downward from the sensing line in the battery module and drawn out to the outside of the module case.

A battery pack according to still another aspect of the present invention includes a battery module stack in which a plurality of the battery module are stacked in the thickness direction of the battery cell, and a first sensing block and a second sensing block that extend in the thickness direction of the battery cell and are coupled to first sensing pins and second sensing pins of the battery modules, respectively.

Another battery pack of the present invention may include a battery module stack in which a plurality of the battery module are stacked in the thickness direction of the battery cell, and a side sensing block that extends in the thickness direction of the battery cell and is coupled to the sensing pins of the sensing lines drawn out to the outside through a front end plate or a rear end plate of the module case.

### [Advantageous Effects]

According to the present invention, it is possible to obtain an expandable battery module capable of improving space utilization of a battery module and a battery pack by connecting battery cells in a longitudinal direction in addition to a thickness direction.

In addition, the present invention can realize a direct sensing structure suitable for the expandable battery module.

In addition, the present invention can provide a battery pack with a structure allowing direct sensing to be performed in a simple manner without a complex assembly structure when sensing between a plurality of battery modules.

### [Brief Description of the Drawings]

Part (a) of FIG. 1 is a partial perspective view of a conventional general battery module 1, and part (b) of FIG. 1 illustrates a connection structure of the conventional battery modules for inter-module sensing.
FIG. 2 is an exploded perspective view of a battery module of the present invention.
FIG. 3 is a perspective view illustrating a structure of a venting plate included in the battery module of FIG. 2.
FIG. 4 is a set of a rear view and a front view illustrating a coupling structure of a terminal bus bar sensing member and an inter-bus bar support block according to one embodiment of the present invention.
FIG. 5 is a perspective view illustrating a coupling structure of a sensing pin of a sensing line according to one embodiment of the present invention.
FIG. 6 is a perspective view illustrating one embodiment of the coupling structure of the sensing pin of the sensing line viewed from a side opposite to that of FIG. 5.
FIG. 7 is a perspective view illustrating a coupling structure of the sensing line, the sensing pin, and the battery cell assembly viewed from above.
FIG. 8 is a perspective view illustrating an exterior of a module case to which the sensing pin of the embodiment of FIG. 5 is coupled.
FIG. 9 is a perspective view illustrating a coupling structure of a sensing pin of a sensing line according to another embodiment of the present invention.
FIG. 10 is a set of a perspective view, a front view, and a plan view illustrating a structure of an inter-bus bar sensing member according to another embodiment of the present invention.
FIG. 11 is a perspective view illustrating a coupling process of a battery pack according to one embodiment of the present invention.
FIG. 12 is a perspective view illustrating the battery pack according to the embodiment of FIG. 11 in more detail.
FIG. 13 is a perspective view illustrating a battery pack according to another embodiment of the present invention.

### [Description of Reference Numerals]

10: battery cell
11 and 12: leads
100: battery cell assembly
110: longitudinal unit cell
200: sensing line
210 and 210': sensing pins
220 and 220': reinforcing members
300: module case
310: C-shaped wall
311: opening
320: I-shaped wall
330: front end plate
330S: opening
340: rear end plate
400: venting plate
410: body portion
411 and 416: venting channels
410C: partition wall
412 and 412': inter-bus bar coupling long holes
413 and 413': inter-bus bar sensing member coupling long holes
414 and 414': venting long holes
415: support block coupling hole
417: coupling hole
420: heat propagation prevention plate
421: inter-bus bar coupling long hole
510: inter-bus bar
520 and 520': terminal bus bars
610 and 610': inter-bus bar support blocks
620 and 620': terminal bus bar sensing members
630: inter-bus bar sensing member
700 and 700': sealing members
800: insulating elastic member
1000: battery module
1000': battery module stack
1100 and 1100' : sensing blocks
1100" : side sensing block

### [Best Mode]

Hereinafter, the present invention will be described in detail. Prior to this, terms or words used in the present specification and claims should not be restrictively interpreted as ordinary meanings or dictionary-based meanings, but should be interpreted as meanings and concepts consistent with the technical ideas of the present invention on the basis of the principle that an inventor can properly define the concept of a term to describe and explain his or her invention in the best way.

Throughout this specification, it should be understood that terms such as "include" or "have" are intended to indicate that there is a feature, number, step, operation, component, part, or a combination thereof described on the specification, and they do not exclude in advance the possibility of the presence or addition of one or more other features or numbers, steps, operations, components, parts or combinations thereof.

Further, when a portion such as a layer, a film, an area, a plate, or the like is referred to as being "on" another portion, this includes not only the case in which the portion is "directly on" the another portion but also the case in which still another portion is interposed therebetween. In contrast, when a portion such as a layer, a film, an area, a plate, or the like is referred to as being "below" another portion, this includes not only the case in which the portion is "directly below" the another portion but also the case in which still another portion is interposed therebetween. In addition, to be disposed "on" in the specification of the present invention may include the case disposed at the lower portion as well as the upper portion.

### [Battery module]

A battery module according to the present invention includes a battery cell assembly in which two or more longitudinal unit cells, each of which two or more battery cells having electrode leads at both ends in the longitudinal direction are arranged in a row in the longitudinal direction, are stacked in two or more columns in the thickness direction of the battery cell, a sensing line electrically connected to the electrode lead of the battery cell included in the battery cell assembly, and a module case configured to surround and accommodate the battery cell assembly, wherein a sensing pin drawn out to the outside of the module case is provided on an end portion of the sensing line.

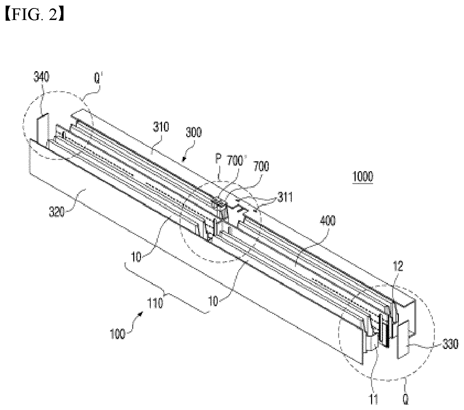

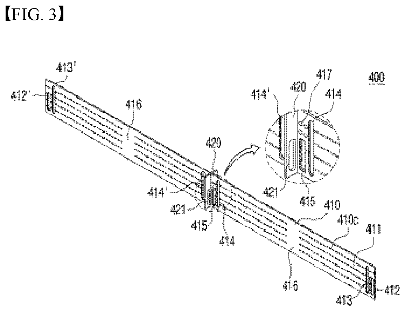

FIG. 2 is an exploded perspective view of a battery module of the present invention, and FIG. 3 is a perspective view illustrating a structure of a venting plate included in the battery module of FIG. 2.

As shown in FIG. 2, the present invention includes a battery cell assembly 100 including a longitudinal unit cell 110, and a module case 300 in which the battery cell assembly 100 is accommodated. In FIG. 2, based on a typical pouch-shaped battery cell 10 having leads 11 and 12 at both ends thereof and extending long in a longitudinal direction, an X direction is the longitudinal direction of the battery cell 10 or the battery module (case), a Y direction (a stacking direction of the battery cell) is a thickness direction of the battery cell 10 or the module case 300, and a Z direction is an up and down direction.

The battery cell 10 of the present invention is directed to a battery cell (a so-called bidirectional battery cell (bidirectional pouch cell)) in which electrode leads 11 and 12 are provided at both ends in the longitudinal direction. According to this configuration, in one battery cell 10, since a positive electrode lead 11 and a negative electrode lead 12 are provided to protrude from both ends, respectively, interference does not exist between the leads, and thus, an area of the electrode lead can be increased, and an coupling operation of the electrode leads 11 and 12 and a bus bar can be performed more easily.

The battery cell assembly 100 of the present invention includes a bundle of the battery cells 10, in which two or more of these bidirectional battery cells 10 are arranged in a line in the longitudinal direction and electrode leads of the battery cells 10, which face each other in the longitudinal direction, are electrically connected to each other, as the longitudinal unit cell 110. In FIG. 2, two battery cells 10 are connected in the longitudinal direction to compose the longitudinal unit cell 110, but two or more battery cells may be connected in the longitudinal direction. The number of the battery cells 10 connected in the longitudinal direction is not limited in principle as long as a space of a battery pack, in which the battery module case 300 or a battery module 1000 is installed, is allowed. However, approximately two to four battery cells 10 may be connected in the longitudinal direction since a space of the battery module 1000 or battery pack that can be actually installed in a vehicle is limited. In addition, the number of the battery cells 10 connected in the longitudinal direction may be changed according to the size (length) of the battery cell 10 to be connected. As described above, in the present specification, an assembly of the battery cells 10 provided by arranging two or more battery cells 10, each of which has the leads 11 and 12 provided at both ends in the longitudinal direction, in a line to face each other and electrically connecting facing leads 11 and 12 of the battery cells are referred to as the longitudinal unit cell 110.

The battery cell assembly 100 included in the battery module 1000 of the present invention is composed by stacking the longitudinal unit cells 110 in two or more columns in the thickness direction (X direction) of the battery cell 10. The number of columns in which the longitudinal unit cells 110 are stacked also depends on the allowable space of the battery module 1000 and the battery pack, the size of the battery cell 10, and the like. In addition, the number of the battery cells 10 in the longitudinal direction, the number of columns, and the like may be determined in consideration of the required capacity of an electric device. As described above, according to the present invention, the number of the battery cell assemblies 100, which are accommodated in the module case 300, in the longitudinal direction of the battery cell and the number of columns may be adjusted, and thus a degree of freedom in design is improved. In addition, when about two to four battery cell assemblies 100 are stacked in the longitudinal direction and the resultant stack is stacked in about two to six columns in the thickness direction of the battery cell instead of stacking several tens of the battery cell assemblies 100 as in the related art, the battery cell assembly 100 can be configured in a compact manner. In addition, when the battery cell assembly 100 composed of a small number of the battery cells 10 is accommodated in a separate module case 300, and the battery module 1000 including the module case 300 is stacked in the longitudinal direction or the thickness direction of the battery cell 10 like Lego blocks, the battery pack may be freely configured in consideration of a space in which the battery module 1000 is installed or an installation space of the battery pack. For example, when the battery module 1000 is stacked in the longitudinal direction, even when the battery cells of the longitudinal unit cell 110 are not connected longer in the longitudinal direction, the same effect can be achieved. Accordingly, an individual battery module (unit module) can be configured to be more compact in size. In addition, the degree of freedom in design may be improved by stacking the battery module 1000 in the thickness direction of the battery cell as many as the required number. With the structure in which several tens of battery cells are stacked in one module case as shown in FIG. 1, it is difficult to configure the battery pack as desired. That is, since the minimum units of the battery cells included in the battery module constituting the battery pack are different, the degree of freedom in design of the conventional battery module 1 is inevitably reduced.

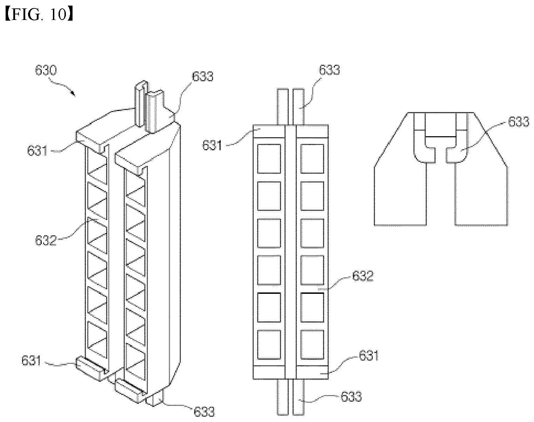

In addition, for example, when ignition occurs in some battery cells included in the battery module, in the battery module 1 of FIG. 1, flame easily propagates to the adjacent battery cells. However, in the structure of the battery module 1000 of FIG. 2 or a battery pack disclosed in FIG. 10, which will be described below, since a small number of the battery cell assemblies 100 are separately accommodated in the battery module 1000, even when ignition occurs in the battery cells 10 in one battery module 1000, the ignition is difficult to propagate to other battery modules 1000.

As described above, the battery cell assembly 100 of the present invention has the form in which the battery cell assembly 100 is composed of a specific number of the battery cells 10 connected in the longitudinal direction and the thickness direction of the battery cell is accommodated in each module case 300. Accordingly, various types of battery packs may be manufactured according to a stacking (design) method of the battery module 1000 including the battery cell assembly 100, and thus the battery module 1000 of the present invention can be referred to as an expandable module.

The battery cell assembly 100 of the present invention shown in FIG. 2 has a so-called 2P4S connection structure and is composed of a total of eight battery cells 10 by connecting two battery cells 10 in the longitudinal direction and stacking the longitudinal unit cells 110 in four columns.

However, a battery cell assembly composed by stacking the two longitudinal unit cells 110 in even-numbered columns, such as two columns (1P4S), six columns (3P4S), or eight columns (4P4S), may also be possible by varying the number of columns of the two longitudinal unit cells 110 connected in the longitudinal direction. In addition, instead of the structure of connecting two longitudinal unit cells in the longitudinal direction, a structure of connecting three longitudinal unit cells (1P6S, 2P6S, 3P6S, ..., or the like), and a structure connecting four longitudinal unit cells (1P8S, 2P8S, 3P8S, ..., or the like), or a structure of connecting more longitudinal unit cells is also possible. For example, it is an advantage of the present invention that a stack structure of each of the longitudinal unit cell 110 and the battery cell assembly 100 can be changed in various and scalable ways according to a design request of the above-described battery module 1000 and the battery pack.

Although not shown in the drawing, an insulating plate, an insulating sheet, or the like may be installed between the columns of the longitudinal unit cells 110. In one embodiment of the present invention, a venting plate 400 is installed between the columns of the longitudinal unit cells 110 instead of the insulating plate.

Referring to FIG. 3, the venting plate 400 is installed to extend in the longitudinal direction of the battery cell 10 across front and rear ends of the module case 300 between the columns of the longitudinal unit cells 110 constituting the battery cell assembly 100. The same number of columns of longitudinal unit cells 110 are disposed on each of both sides with respect to the venting plate 400.

The venting plate 400 may serve to prevent heat propagation between the longitudinal unit cells 110 when flame is generated due to overheating or ignition. In particular, the venting plate 400 has a hollow structure in which venting channels 411 and 416 capable of discharging gas and flame are provided. The venting channels 411 and 416 include a plurality of longitudinal channels 411 divided by a partition wall 410C and a transverse channel 416 extending from the longitudinal channels 411, thereby discharging gas or flame generated in the module to the outside of the module. The venting plate 400 has a size and a length capable of completely covering the longitudinal unit cell 110 so as to discharge gas or flame generated from the battery cell 10, particularly, the electrode lead portion. As shown in FIG. 3, a body portion 410 of the venting plate 400 is provided long enough to extend across the front and rear ends of the module case 300. The venting plate 400 may also serve as an installation base, on which a bus bar or an electrode lead to be described below or a support member for supporting the bus bar and the electrode lead can be installed. To this end, the venting plate 400 of FIG. 3 includes installation holes in which various members can be installed. In addition, a heat propagation prevention plate 420 for supporting the electrode leads of the battery cells 10, which face each other in the longitudinal direction, and the bus bar, to which the electrode leads are coupled, is provided at a central portion of the body portion 410 of the venting plate 400 to be perpendicular to the body portion 410. The heat propagation prevention plate 420 serves to prevent heat from propagating between the battery cells 10 in the longitudinal direction. Specifically, inter-bus bar coupling long holes 412 and 412' are provided in a front end portion and a rear end portion of the body portion 410 of the venting plate 400, respectively, and sensing member coupling long holes 413 and 413' are provided respectively behind the inter-bus bar coupling long holes 412 and 412'. In addition, venting long holes 414 and 414' each having a size similar to that of each of the sensing member coupling long holes 413 and 413' are respectively provided in left and right sides of the heat propagation prevention plate 420 at the central portion of the body portion 410. Since the venting long holes communicate with the venting channel 411 described above, gas or flame generated from the electrode lead portion can be introduced into the venting channel 411 to be discharged to the outside. Coupling holes 417 to which a sensing member 620, to which terminal bus bars 520 and 520' to be described below is coupled, and a coupling hole 415 for coupling an inter-bus bar support block 610 are provided between the heat propagation prevention plate 420 of the central portion of the body portion 410 and each of the venting long holes 414 and 414'.

Meanwhile, a through hole (long hole) 421 to which an inter-bus bar 510, to which the electrode leads facing in the longitudinal direction are coupled, is coupled is provided in the heat propagation prevention plate 420.

In the expandable battery module of the present invention, when the venting plate 400 having the above-described structure is installed between the longitudinal unit cells 110, gas and flame can be easily discharged as described above, and bus bars and electrode leads can be conveniently installed. In particular, as will be described below, the venting plate 400 may serve to support a sensing line 200 and sensing pins 210 and 210' at end portions of the sensing line 200 according to the present invention.

In addition, the present invention includes the sensing line 200 electrically connected to the electrode leads of the battery cells 10 included in the battery cell assembly 100. The sensing line 200 may be a sensing metal wire of a conductive wire or a sensing cable in which the sensing metal wire is coated with a predetermined coating. Preferably, the sensing line 200 may be a flexible cable, and more preferably, the sensing line 200 may be a cable that can be curved or bent, and may be a plastically deformable sensing cable of which a shape is maintained in a curved state. When the sensing line 200 made of the above material is employed, a path of the electrode lead portion or the bus bar connected to the electrode lead portion or a path of the sensing line 200 connected to the sensing member can be freely changed in the battery module so as to conform to the space in the module, and can be drawn out to the outside of the module case 300.

The sensing line 200 of the present invention is for sensing electrical characteristics of the battery module, that is, voltage, current, resistance, and the like. Accordingly, the sensing line 200 may be connected to a sensing device outside the module, for example, a sensing block to be described below or the like, and ultimately, may be connected to a battery management system (BMS), an electronic control unit (ECU), or a predetermined controller installed in the battery pack and may measure electrical characteristics between unit battery modules or a plurality of battery modules. The sensing line 200 needs to be electrically connected to the electrode leads of all the battery cells 10 included in the battery cell assembly 100 to measure electrical characteristics in a unit of battery module. However, the sensing line 200 is not necessarily directly connected to each electrode lead, and it is sufficient when the sensing line 200 is electrically connected to the electrode lead through at least one of a bus bar coupled to the electrode lead and a sensing member coupled to the bus bar.

A characteristic point of the present invention is that the sensing pins 210 and 210' drawn out to the outside of the module case 300 are provided at end portions of the sensing line 200. That is, instead of installing a connector with a male and female coupling structure for sensing as in the conventional battery module, the sensing line 200 connected to all the battery cells 10 is direction-switched toward the outside, the sensing pins 210 and 210' are installed at the ends of the sensing line 200, and the sensing pins 210 and 210' are located outside the module case 300. As described above, the sensing pins 210 and 210' of the present invention each have the form of a simple pin rather than a connector structure, and thus are easily electrically coupled to an external terminal. In addition, since the sensing pin has the form of a pin with a very simple coupling structure, when an external connection mechanism is configured in a form that can be coupled to the sensing pins 210 and 210' of a plurality of battery modules at once, sensing between the modules is also performed easily. A preferred form of the external connection mechanism coupled to the sensing pins 210 and 210' will be described below.

The present invention includes the module case 300 surrounding and accommodating the battery cell assembly 100. The module case 300 has a rectangular parallelepiped structure extending long in the longitudinal direction to accommodate the battery cell assembly 100 unique to the present invention. In FIG. 2, the module case 300 is provided by coupling a C-shaped wall 310 and an I-shaped wall 320, but the present invention is not limited thereto. For example, a form in which two C-shaped walls disposed left and right or up and down are combined is possible, and a form in which upper, lower, left, and right cases are separated and coupled through welding, hooking coupling, a fastening member, or the like is also possible. In addition, the module case 300 of the present invention includes a front end plate 330 and a rear end plate 340. The front end plate 330 and the rear end plate 340 are coupled to coupling bodies of the C-shaped wall 310 and the I-shaped wall 320 to close front and rear sides of the module, respectively.

The module case 300 of the present invention may include openings 311 and 330S at positions corresponding to positions of the sensing pins. The sensing pins can be drawn out to the outside of the module case 300 through the openings 311 and 330S. As will be described below, the sensing pin may be drawn out from a position of an intermediate portion, a front end, or a rear end of the longitudinal unit cell 110. Thus, the openings 311 and 330S of the module case 300 may be provided in an upper portion or a lower portion of an intermediate portion of the module case 300 as shown in FIG. 2, or may be provided in predetermined positions of the front end plate 330 and the rear end plate 340.

However, as long as the sensing pin has a shape that can be properly drawn out of the module case 300, the openings do not necessarily have to be provided. For example, when the sensing pins 210 and 210' are pulled out from between the left and right separated module cases 300 and placed outside the module case 300, and the left and right module cases 300 are assembled, as a result, the sensing pins may be located outside the module case 300. However, in this case, since the sensing line 200 connected to the sensing pins 210 and 210' may be damaged by being caught between the module cases 300 or a gap may be provided between the module cases 300 due to the sensing line 200, it is necessary to couple the module cases 300 in consideration of fastening pressure between the cases, a sealing clearance, and the like.

As described above, the sensing line 200 needs to be electrically connected to the electrode leads of all the battery cells 10 of the battery cell assemblies 100 through the bus bar or the sensing member. Under this premise, a structure of a bus bar of embodiments applicable to the battery module of the present invention will be described, and a specific structure of the sensing line and the sensing pin related thereto will be described.

### [Modes of the Invention]

### (First embodiment)

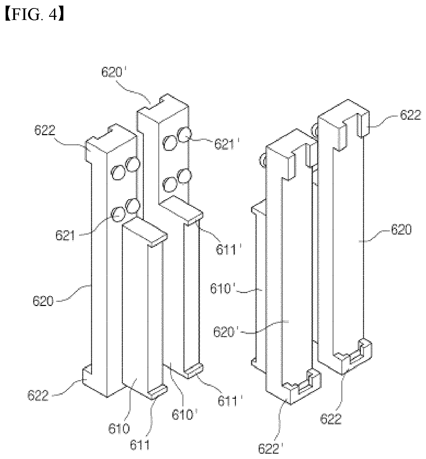

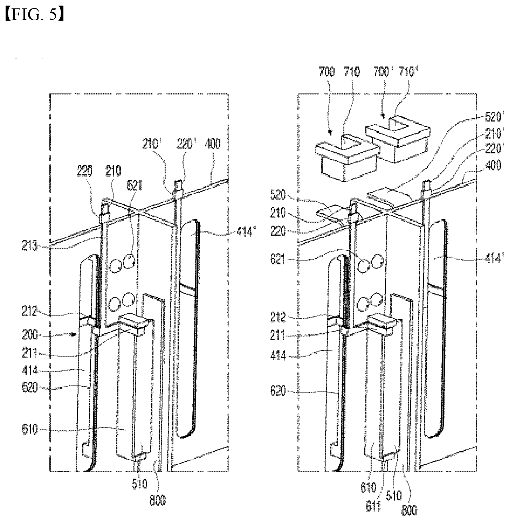

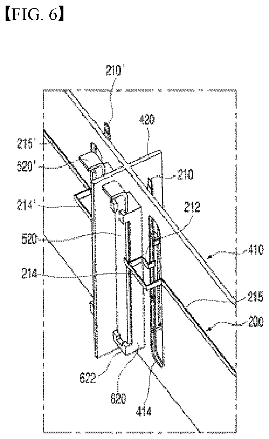

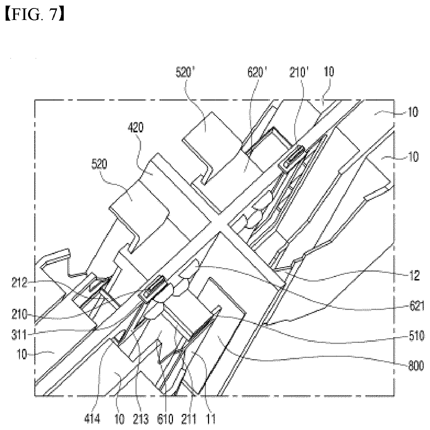

FIG. 4 is a set of a rear view and a front view illustrating a coupling structure of a terminal bus bar sensing member and an inter-bus bar support block according to one embodiment of the present invention, FIG. 5 is a perspective view illustrating a coupling structure of a sensing pin of a sensing line according to one embodiment of the present invention, FIG. 6 is a perspective view illustrating one embodiment of the coupling structure of the sensing pin of the sensing line viewed from a side opposite to that of FIG. 5, and FIG. 7 is a perspective view illustrating a coupling structure of the sensing line, the sensing pin, and the battery cell assembly 100 viewed from above.

The sensing line 200 of the present invention can be electrically connected to the battery cells of the battery cell assembly 100 through a bus bar. The bus bar may be at least one of terminal bus bars 520 and 520' connected to an external terminal, and an inter-bus bar 510 coupled to the electrode leads of the battery cell 10 to electrically connect the battery cells.

FIGS. 5 to 7 illustrate an embodiment in which the terminal bus bars 520 and 520' and the inter-bus bar 510, and the sensing line 200 are connected.

Prior to describing FIGS. 5 to 7, an example of a structure of a terminal bus bar sensing member and an inter-bus bar support block for installing the terminal bus bar and the inter-bus bar in the battery module of the present invention will be described with reference to FIG. 4.

Referring to FIG. 4, terminal bus bar sensing members 620 and 620' including hooks 622 and hooks 622' between which the terminal bus bars 520 and 520' are fitted, respectively, are provided. The terminal bus bar sensing members 620 and 620' have sensing pin portions on front surfaces thereof facing the terminal bus bars 520 and 520', and the coupling hook portions 622 and the coupling hook portions 622' between which the terminal bus bars 520 and 520' are fitted on upper and lower ends of the sensing pin portions, respectively. Accordingly, when the terminal bus bars 520 and 520' are fitted between and coupled to the coupling hook portions 622 and the coupling hook portions 622', respectively, the terminal bus bars 520 and 520' come into contact with the sensing pin portions to electrically connect the terminal bus bar sensing members 620 and 620' and the terminal bus bars 520 and 520', respectively.

Coupling protrusions 621 and 621' coupled to the coupling holes 417 of the venting plate body portion 410 are provided on upper sides of rear surfaces of the terminal bus bar sensing members 620 and 620' of the present embodiment, respectively. In addition, inter-bus bar support blocks 610 and 610' coupled to the coupling holes 415 of the body portion 410 are provided on lower sides of the rear surfaces of the terminal bus bar sensing members 620 and 620', respectively. The inter-bus bar support blocks 610 and 610' allow the terminal bus bar sensing members 620 and 620' to be more firmly fastened to the venting plate 400. In addition, hooks 611 and hooks 611' are provided at upper and lower ends of the inter-bus bar support blocks 610 and 610', respectively, and an inter-bus bar 510 located on the rear sides of the terminal bus bar sensing members 620 and 620' is fastened to the hooks 611 and 611'. As described above, the terminal bus bar sensing members 620 and 620' of the present embodiment include fastening portions coupled to the venting plate 400 and the inter-bus bar 510, and thus the rigidity of the coupling structure of the longitudinal unit cells can be further improved.

The battery cell assembly 100 of the present invention has a structure in which the longitudinal unit cells 110 are stacked in two or more columns, and thus, as described above, all of the terminal bus bars 520 and 520' and the inter-bus bar 510 may be applied to the electrode leads of the facing battery cell 10 of the longitudinal unit cell 110. For example, when the battery cell assembly 100 is configured with a 2P4S structure, the same number of columns (two columns) of the longitudinal unit cells 110 may be disposed on each of both sides with respect to the longitudinal direction of the battery cell. In a 1P4S structure, one row of the longitudinal unit cell 110 may be disposed on each of the both sides.

Referring to FIGS. 5 to 7, the venting plate 400 described above may be installed between the same number of the longitudinal unit cells 110. Each of the electrode leads 11 and 12 of the battery cells 10, which face each other in the longitudinal direction, of the longitudinal unit cells 110 at one side (front side in FIG. 5) based on the longitudinal direction of the battery cell 10 are coupled to the inter-bus bar 510. The inter-bus bar support blocks 610 and 610' are installed on a rear surface of the inter-bus bar 510 to support the inter-bus bar 510.

The electrode leads 11 and 12 of the battery cells 10, which face each other in the longitudinal direction, may be coupled to left and right sides of the inter-bus bar 510, respectively (see FIG. 7). In order to more securely fix the inter-bus bar, an inter-bus bar coupling long hole 421 is provided in the heat propagation prevention plate 420 disposed perpendicular to the body portion 410 of the venting plate 400 (see FIG. 3), and the inter-bus bar 510 may be coupled to the heat propagation prevention plate 420 through the long hole 421 (see FIG. 4). In order to more securely fix the inter-bus bar 510, an insulating elastic member 800 may be fitted on each of the left and right sides of the heat propagation prevention plate 420. However, the venting plate 400 is not essential for coupling the electrode leads and the inter-bus bar 510, and it is also possible that the inter-bus bar 510 is fixedly located between the facing electrode leads 11 and 12 of the battery cells 10 by, for example, welding the inter-bus bar 510 to the facing electrode leads of the battery cells 10. However, when the venting plate 400 is provided, it is advantageous to fix the inter-bus bar 510 as well as to support the sensing line 200, and thus it is preferable that the venting plate 400 is provided.

Since the inter-bus bar support blocks 610 and 610' are to be integrally with terminal bus bar sensing members 620 and 620' coupled to the terminal bus bars 520 and 520', respectively, it is possible to more firmly form the coupling structure of the terminal bus bars 520 and 520', the venting plate 400, the inter-bus bar 510, and the sensing line 200. Referring to FIG. 6, it is illustrated that the terminal bus bar sensing members 620 and 620' are coupled to the venting plate 400 on an opposite side surface of the venting plate 400.

Although FIG. 5 is a view viewed from a left side with respect to the heat propagation prevention plate 420, the inter-bus bar support block 610', the terminal bus bar 520', and the terminal bus bar sensing member 620', which are the same as those on the left side, are also coupled to the venting plate 400 on a right side. The terminal bus bars 520 and 520' can be simply coupled to the terminal bus bar sensing members 620 and 620', respectively, by fitting coupling by a hook or the like (see FIG. 6). FIG. 5A illustrates a shape before the coupling of the terminal bus bars 520 and 520', and FIG. 4B illustrates a state in which the terminal bus bars 520 and 520' are coupled to the terminal bus bar sensing members 620 and 620'. In FIG. 5B, sealing members 700 and 700' fitted through upper ends of the terminal bus bars are shown above the terminal bus bars 520 and 520', respectively. Fitting grooves 710 and 710' into which head portions of the terminal bus bars are fitted are formed in the sealing members 700 and 700', respectively. In FIGS. 6 and 7, for convenience of illustration, the illustration of the sealing members 700 and 700' is omitted.

Referring to FIGS. 6 and 7, the terminal bus bars 520 and 520' are respectively coupled to the front surfaces of the terminal bus bar sensing members 620 and 620', and the electrode leads 11 and 12 protruding from the battery cells 10 of the battery cell assemblies 100 are respectively coupled to front ends of the terminal bus bars 520 and 520'.

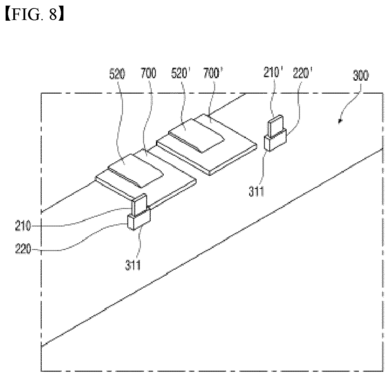

Referring to FIG. 5, the sensing line 200 according to the present invention includes a portion 211 connected to an upper portion of the inter-bus bar 510, and a portion 212 extending from the portion 211 to the opposite side surface of the venting plate 400 by passing through the long hole 414 or 414' of the venting plate 400. The sensing line 200 is drawn upward between the connected portion 211 and the extending portion 212, and the sensing pin 210 or 210' is formed at an end portion of an upwardly drawn portion 213 of the sensing line. Coating portions or reinforcing members 220 and 220' are installed at end portions of sensing pins 210 and 210', respectively. The sensing pins 210 and 210' are drawn out to the outside of the module case 300 as shown in FIG. 8.

Meanwhile, referring to FIG. 6, the sensing line 200 further includes the portion 212 extending to the opposite side surface of the venting plate 400, a terminal bus bar contact portion 214 extending from the portion 212, and a longitudinal sensing line 215 extending from the terminal bus bar contact portion 214 to both end portions of the longitudinal unit cell 110. The longitudinal sensing line 215 extends in the longitudinal direction and is connected to the electrode leads of the battery cells 10 at both end portions of the longitudinal unit cell 110. That is, as described above, since the sensing line 200 of the present invention is connected to the electrode leads of all the battery cells included in the battery cell assembly 100, the sensing pins 210 and 210' of the sensing line 200 can measure electrical characteristics of the entire battery module 1000, that is, electrical characteristics in a unit of module.

In FIGS. 5 and 7, the sensing pins 210 and 210' are bent upward from a position of the portion 213 of the sensing line connecting the inter-bus bar 510 and the terminal bus bar sensing members 620 and 620', but may also be bent downward to be drawn out to the outside of the module case 300. In this case, openings 311 and 311' through which the sensing pins 210 and 210' can respectively pass may be provided in an upper or lower portion of the module case 300 to correspond to positions of the sensing pins 210 and 210'.

In FIG. 8, it is illustrated that two sensing pins 210 and 210' are drawn out to the outside of the module case 300. In FIG. 8, the above-described terminal bus bars 520 and 520' and the sealing members 700 and 700' for sealing the terminal bus bars are also exposed to the outside of the module case 300. The terminal bus bars 520 and 520' may be connected to an external terminal.

Since the sensing line 200 is electrically connected to all the battery cells of the present invention, even when one of two sensing pins 210 and 210' is installed on only one of left and right sides instead of installing the two sensing pins 210 and 210' as shown in FIG. 8, there is no problem in sensing the electrical characteristics in a unit of module. However, when the battery module 1000 having a structure as in the present invention is stacked, for example, in the thickness direction of the battery cell 10 to configure a battery pack, there is a case in which the battery cell 10 or the battery cell assembly 100 included in the battery module 1000 is disposed such that directions of an electrical polarity thereof are alternately different from each other. In this case, polarities of the electrode leads of the battery cells 10 facing each other are alternately changed in the longitudinal unit cell 110. Accordingly, in terms of facilitating sensing at a unit of battery pack in consideration of these cases, the sensing pin (a first sensing pin 210) drawn from a side of the terminal bus bar (a first terminal bus bar 520) coupled to one electrode lead or electrode leads among the electrode leads of the battery cells 10, which face each other in the longitudinal direction, and the sensing pin (a second sensing pin 210') drawn from a side of the terminal bus bar (a second terminal bus bar 520') coupled to the other electrode lead or electrode leads among the electrode leads of the battery cells 10 may be configured in pairs.

### (Second embodiment)

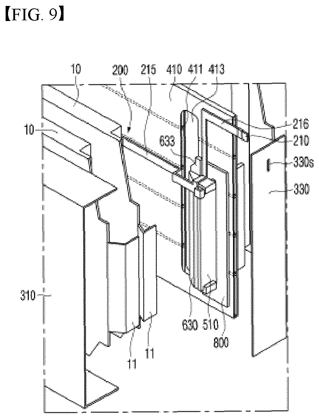

FIG. 9 is a perspective view illustrating a coupling structure of a sensing pin of a sensing line according to another embodiment of the present invention, and FIG. 10 is a set of a perspective view, a front view, and a plan view illustrating a structure of an inter-bus bar sensing member according to another embodiment of the present invention.

In the present embodiment, a structure in which the sensing line 200 is electrically connected to the battery cells 10 at the front and rear ends of the longitudinal unit cell 110 is illustrated under the premise that the longitudinal sensing line 215 is electrically connected to the electrode leads of the battery cells 10 of the longitudinal unit cell 110, which face each other, as described above.

Referring to FIG. 10, the inter-bus bar 510 coupled to the electrode leads 11 and 12 protruding from the battery cells 10 at the front and rear ends of the longitudinal unit cell 110 is installed. The same number of columns of longitudinal unit cells 110 are disposed on each of both sides of the inter-bus bar 510, and the leads 11 and 12 of the battery cells at the end portions of the unit cells 110 on the both sides are bent and coupled to the inter-bus bar 510. Accordingly, when the longitudinal sensing line 215 is coupled to the inter-bus bar 510, the sensing line 215 is electrically connected to the leads 11 and 12 of the battery cells at the end portions of the unit cells 110. When the sensing line connected to the inter-bus bar 510 is drawn out toward the outside and the sensing pin 210 at an end portion of a drawn portion 216 is drawn out to the outside of the module case 300, the sensing pin 210 can be located outside the module case 300 at a position different from that of FIG. 8. In order to draw the sensing pin 210 at the end portion to the outside in FIG. 9, an opening 330S through which the sensing pin 210 can pass is formed in the front end plate 330 coupled to the front of the inter-bus bar 510. Although not shown in the drawing, the sensing pin 210 having the same structure and the rear end plate 340 having the same opening may also be installed at the rear end of the module case 300.

Even in the present embodiment, when the venting plate 400 described above is installed between the same number of columns of longitudinal unit cells 110, the inter-bus bar 510 can be easily installed in the long hole 412 provided at the front end of the venting plate 400. The insulating elastic member 800 may be fitted on each of the left and right side surfaces of the venting plate 400 to securely fix the inter-bus bar 510.

In addition, an inter-bus bar sensing member 630 may be installed at a rear end of the inter-bus bar 510. The longitudinal sensing line 215 may be connected to the inter-bus bar 510 to sense electrical characteristics of the battery cell, but the sensing can be performed even when the longitudinal sensing line 215 is connected to the inter-bus bar sensing member 630.

Referring to FIG. 10, the inter-bus bar sensing member 630 has body portions facing each other on both sides thereof and has an approximately C-shape in which the facing body portions are connected to each other (see the plan view of FIG. 10). First hook portions 631, between which the inter-bus bar 510 can be fitted, are respectively formed to protrude from upper and lower ends of a front surface of each of the body portions, and a plurality of sensing pins 632 are formed on the front surface of the body portion between the first hook portions 631. Accordingly, the inter-bus bar 510 is fitted between the first hook portions 631 and comes into contact with the sensing pins 632 to be electrically connected to the inter-bus bar sensing member 630. In addition, the inter-bus bar sensing member 630 includes a second hook portion 633 on each of an upper portion and a lower portion of the body portion thereof. When the inter-bus bar sensing member 630 is coupled to the venting plate 400 described above, the second hook portions 633 are portions fitted into and coupled to a through-hole edge (inter-bus bar sensing member coupling long holes 413 and 413') of the venting plate 400 (see FIG. 3).

### [Battery pack]

### (First embodiment)

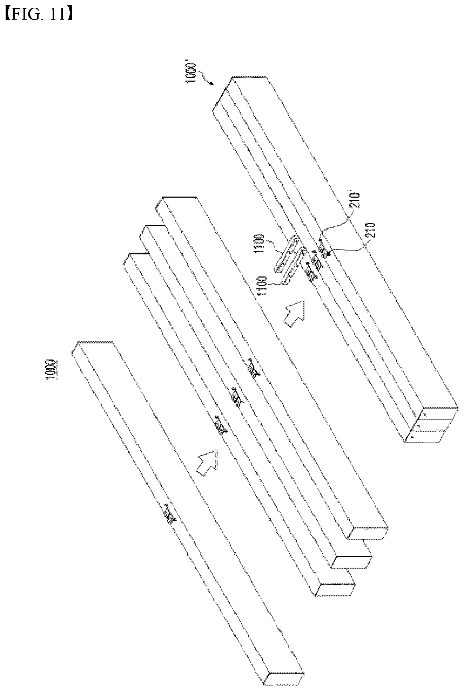

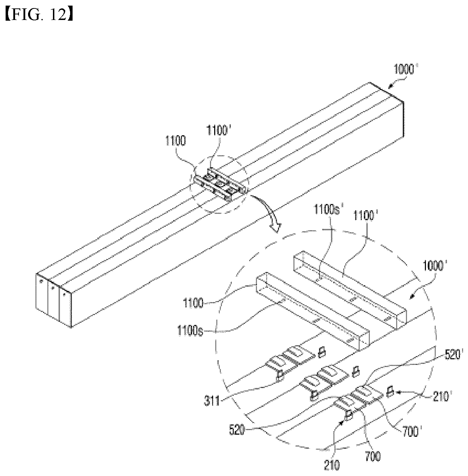

FIG. 11 is a perspective view illustrating a coupling process of a battery pack according to one embodiment of the present invention, and FIG. 12 is a perspective view illustrating the battery pack according to the embodiment of FIG. 11 in more detail.

In FIG. 11, it is illustrated that three battery modules 100 of the present invention are stacked in the thickness direction of the battery cell to configure a battery module stack 1000'.

The battery module 1000 was described in the embodiment of FIGS. 5 to 8, and a pair of sensing pins 210 and 210' are drawn from an upper portion of the module case 300. Referring to FIG. 12, as sensing blocks 1100 and 1100' extending in the thickness direction of the battery cell are coupled to the sensing pins 210 and 210', respectively, the sensing pins 210 and 210' of a plurality of battery modules 1000 can be connected to each other. That is, the sensing pins 210 and 210' can be easily coupled to the sensing blocks 1100 and 1100', respectively, by forming coupling grooves 1100S and 1100S', into which the sensing pins 210 and 210' are fitted, in coupling surfaces facing the sensing pins 210 and 210' of the sensing blocks 1100 and 1100', respectively. In order to enhance the coupling of the sensing blocks 1100 and 1100', the sensing blocks 1100 and 1100' may also be separately coupled to the battery module 1000 or the module case 300 of the battery module stack 1000'. As described above, the sensing blocks 1100 and 1100' are disposed in the thickness direction of the battery cell, and the sensing pins 210 and 210' are coupled to the lower portions of the sensing blocks 1100 and 1100' at once, so that inconvenience of forming a connector or installing an inter-bus bar or a harness between modules as in the related are can be removed. Coupling of a sensing unit can be simply completed by fitting the lower sensing pins 210 and 210' into the upper sensing blocks 1100 and 1100' and coupling thereto. The sensing blocks 1100 and 1100' are, for example, conductive metal blocks and may be connected to a BMS or the like of the battery pack by a cable.

In FIG. 12, the sensing blocks 1100 and 1100' are installed on an upper side of the module case 300, but, when the sensing pins are bent downward from the sensing line 200 in the battery module and drawn out to the outside, the sensing blocks 1100 and 1100' can be coupled to a lower portion of the module case 300.

In addition, since the sensing line 200 is connected to all the battery cells, both the left and right sensing blocks 1100 and 1100' are not required, when the case is considered in which the battery modules are stacked by changing the polarities of the electrode leads between the battery modules as described above, it is preferable to include both a first sensing block 1100 and a second sensing block 1100' respectively coupled to first sensing pins 210 and second sensing pins 210' of the battery modules 1000.

### (Second embodiment)

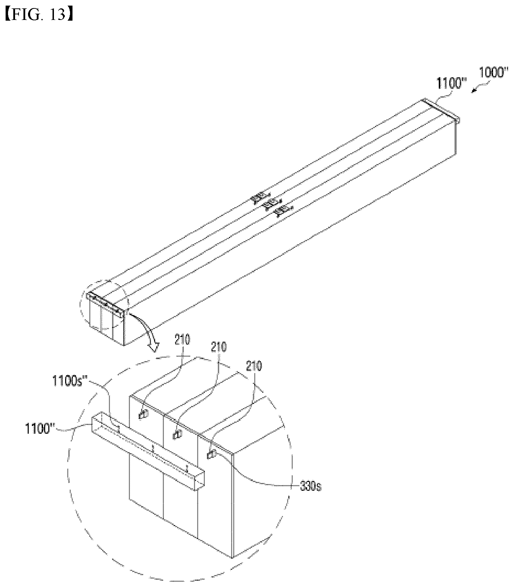

FIG. 13 is a perspective view illustrating a battery pack according to another embodiment of the present invention.

The battery pack illustrated in the present embodiment is a battery pack in a case in which three battery modules of FIG. 9 are stacked in the thickness direction of the battery cell.

Another battery pack of the present invention includes a battery module stack 1000" composed by stacking a plurality of battery modules 1000 in the thickness direction of the battery cell, and a side sensing block 1100" extending in the thickness direction of the battery cell and coupled to the sensing pins 210 of the sensing lines drawn out to the outside through the front end plate 330 or the rear end plate 340 of the module case 300. An opening 330S through which the sensing pin 210 drawn through a front end or a rear end in the longitudinal direction can pass is formed in the front end plate 330 or the rear end plate 340, and the sensing pin 210 drawn out to the outside through the opening 330S is coupled to the side sensing block 1100" extending in the thickness direction of the battery cell at the front end plate 330 or the rear end plate 340 of the module case 300. Since the sensing line is connected to all the battery cells 10 in the module, even when the side sensing block 1100" is present at either one of the front end or the rear end, sensing in a unit of module is possible. However, in a case in which directions of electrical polarities of the battery cells 10 of the stacked module are alternately disposed, when the side sensing block 1100" is installed only in the front end or the rear end, there are cases in which sensing between the modules or sensing in a unit of battery pack is difficult. Accordingly, it is preferable to install the side sensing block 1100" on each of the front end plate 330 and the rear end plate 340 of the module case 300 as shown in FIG. 11.

The drawings disclosed herein are considered to be descriptive and not restrictive of the technical spirit of the present invention, and the scope of the technical spirit of the present invention is not limited by these drawings. The scope of the present invention should be construed by the appended claims along with the full range of equivalents to which such claims are entitled.

Meanwhile, in the present specification, terms indicating directions such as "up," "down," "left,", "right," "front," and "rear" are used, but these terms are only for convenience of description, and it will be obvious to those skilled in the art that these terms may vary depending on positions of an object, positions of an observer, or the like.

## Claims

1. A battery module comprising:
a battery cell assembly in which two or more longitudinal unit cells, each of which two or more battery cells having electrode leads at both ends in the longitudinal direction are arranged in a row in the longitudinal direction, are stacked in two or more columns in the thickness direction of the battery cell;
a sensing line electrically connected to the electrode leads of the battery cell included in the battery cell assembly; and
a module case configured to surround and accommodate the battery cell assembly,
wherein a sensing pin drawn out to the outside of the module case is provided at an end portion of the sensing line.

2. The battery module of claim 1, wherein the module case includes an opening at a position corresponding to a position of the sensing pin so that the sensing pin is drawn out to the outside through the opening.

3. The battery module of claim 1, wherein the sensing line is electrically connected to the electrode leads of all the battery cells of the battery cell assembly through at least one of a bus bar coupled to the electrode leads of the battery cell included in the battery cell assembly and a sensing member coupled to the bus bar.

4. The battery module of claim 3, wherein the bus bar includes at least one of a terminal bus bar connected to an external terminal, and an inter-bus bar coupled to the electrode leads of the battery cells to electrically connect the battery cells.

5. The battery module of claim 4, wherein
the same number of columns of longitudinal unit cells are disposed on each of both sides with respect to the longitudinal direction of the battery cell,
the electrode leads of the battery cells included in the longitudinal unit cells on one side among the longitudinal unit cells on both sides and facing each other in the longitudinal direction, are coupled to the inter-bus bar, and
the electrode leads of the battery cells included in the longitudinal unit cells on the other side among the longitudinal unit cells on both sides and facing each other in the longitudinal direction are coupled to the terminal bus bar.

6. The battery module of claim 5, wherein
the sensing line is connected to each of the inter-bus bar and the terminal bus bar, and
the sensing pin of the sensing line is bent upward or downward from a portion of the sensing line connecting the inter-bus bar and the terminal bus bar, and drawn out to the outside of the module case.

7. The battery module of claim 6, wherein
the terminal bus bar includes a first terminal bus bar coupled to one electrode lead or electrode leads among the electrode leads of the battery cells, which face each other in the longitudinal direction, and a second terminal bus bar coupled to the other electrode lead or electrode leads among the electrode leads of the battery cells, and
the sensing pin includes a first sensing pin on the first terminal bus bar side and a second sensing pin on the second terminal bus bar side.

8. The battery module of claim 6, wherein
a venting plate installed to extend in the longitudinal direction of the battery cell across a front end and a rear end of the module case and having a venting channel therein is installed between the same number of columns of longitudinal unit cells, and
the terminal bus bar, the inter-bus bar, and the sensing line are supported by the venting plate.

9. The battery module of claim 3, wherein
an inter-bus bar coupled to the electrode leads protruding from the battery cells at a front end and a rear end of the longitudinal unit cell is installed at the front end and the rear end of the longitudinal unit cell,
the sensing line is coupled to the inter-bus bar, and
the sensing pin of the sensing line is drawn out to the outside through at least one of a front end plate and a rear end plate of the module case.

10. The battery module of claim 9, wherein
the same number of columns of longitudinal unit cells are disposed on each of both sides with respect to the longitudinal direction of the battery cell,
a venting plate installed to extend in the longitudinal direction of the battery cell across a front end and a rear end of the module case and having a venting channel formed therein is installed between the same number of columns of longitudinal unit cells, and
the inter-bus bar and the sensing line are supported by the venting plate.

11. A battery pack comprising:
a battery module stack in which the battery modules of any one of claims 1 to 10 in plural in the thickness direction of the battery cell are stacked; and
a sensing block that extends in the thickness direction of the battery cell and is coupled to each of sensing pins drawn out to the outside of the battery modules.

12. The battery pack of claim 11, wherein
a coupling groove into which the sensing pin is fitted is provided in a coupling surface of the sensing block that faces the sensing pin.

13. A battery pack comprising:
a battery module stack in which a plurality of the battery modules of claim 6 are stacked in the thickness direction of the battery cell; and
a sensing block that extends in the thickness direction of the battery cell and is coupled to each of the sensing pins bent upward or downward from the sensing line in the battery module and drawn out to the outside of the module case.

14. A battery pack comprising:
a battery module stack in which a plurality of the battery module of claim 7 are stacked in the thickness direction of the battery cell; and
a first sensing block and a second sensing block that extend in the thickness direction of the battery cell and are coupled to first sensing pins and second sensing pins of the battery modules, respectively.

15. A battery pack comprising:
a battery module stack in which a plurality of the battery module of claim 9 are stacked in the thickness direction of the battery cell; and
a side sensing block that extends in the thickness direction of the battery cell and is coupled to the sensing pins of the sensing lines drawn out to the outside through a front end plate or a rear end plate of the module case.
